(19) Europäisches Patentamt

European Patent Office

Office européen des brevets

(11) **EP 4 550 692 A1**

(12) **EUROPEAN PATENT APPLICATION**

(43) Date of publication:
**07.05.2025 Bulletin 2025/19**

(21) Application number: **23207182.9**

(22) Date of filing: **31.10.2023**

(51) International Patent Classification (IPC):
***H04B 10/272*** (2013.01)     ***H04B 10/61*** (2013.01)

(52) Cooperative Patent Classification (CPC):
**H04B 10/272; H04B 10/61**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Adtran Networks SE**
**98617 Meiningen (DE)**

(72) Inventors:
• **Eiselt, Michael**
  **99334 Amt Wachsenburg (DE)**
• **Kuipers, Martin**
  **14624 Dallgow-Döberitz (DE)**
• **Di Rosa, Gabriele**
  **80339 München (DE)**

(74) Representative: **Brachmann, Roland W.**
**Von Lieres Brachmann Schulze**
**Patentanwälte in Partnerschaft**
**Dietramszeller Str. 22**
**83624 Otterfing (DE)**

(54) **PROCESSING OF OPTICAL SIGNALS**

(57)     A solution is provided for processing optical signals, wherein a mixing signal and a transmission carrier are both derived from a single light source, and wherein the mixing signal is located within a frequency band of a received signal and/or wherein the transmission carrier is located within the frequency band of the transmission signal.

# Fig.4A

Optical spectrum

US signal
Received at OLT

$f_c$

$P_{refl}$

mixing signal 401

$P_{RX}$

$f_{mix}$

**Description**

In a passive optical network (PON), upstream and downstream signals are transported on the same fiber. Their spectral ranges are disjoint to avoid interference from scattering and reflections on the fiber. For coherent signals, it is an objective to use a single optical light source as local oscillator (LO) for the receiver and also as a transmit laser. In addition, it is desirable to have only a small frequency gap between the received signal and the frequency of the local oscillator to limit the bandwidth requirement for the analogue and digital components and to allow for faster frequency and phase locking of burst signals.

Coherent PON systems are at an early stage. A straightforward solution is the use of the upper and lower sidebands of the modulated light signal for upstream and downstream signals (or vice versa). While the frequency bands used for both directions are disjoint, any reflected part of the transmitted signal falls into the bandwidth of the coherent receiver, when the transmit laser is used as local oscillator, and saturate amplifiers and ADCs.

The **problem** to be solved is to overcome this disadvantage.

This problem is solved according to the features of the independent claims. Further embodiments result from the depending claims.

The examples suggested herein may in particular be based on at least one of the following solutions. In particular, combinations of the following features could be utilized in order to reach a desired result. The features of the method could be combined with any feature(s) of the device or system or vice versa.

In order to overcome this problem, a method is suggested for processing optical signals,

- wherein a mixing signal and a transmission carrier are both derived from a single light source,
- wherein the mixing signal is located within a frequency band of a received signal and/or wherein the transmission carrier is located within the frequency band of the transmission signal.

In particular, an optical network component, e.g., an OLT or ONU may comprise a transceiver that allows coherent signal processing by utilizing the single light source to define the mixing signal as well as the transmission carrier. The mixing signal may be obtained by a local oscillator (LO) and it may also be referred to as LO signal. The mixing signal has a mixing frequency $f_{mix}$ and the transmission carrier has a transmission frequency fix.

The light source can be set

- to the mixing frequency, then deriving the transmission frequency based on the mixing frequency, or
- to the transmission frequency, then deriving the mixing frequency based on the transmission frequency,

- anything between the mixing frequency and the transmission frequency, then deriving the mixing frequency and the transmission frequency.

According to an embodiment, the single light source comprises a laser or a laser diode.

It is noted that "single light source" may be understood as a light source supplying light at a single frequency. The at least one additional frequency required is then derived from the single frequency of this light source.

According to an embodiment, the method is operated by an optical transceiver.

According to an embodiment, the mixing signal corresponds to or is based on a local oscillator for receiving signals.

According to an embodiment, the mixing signal and a transmission carrier are separated by a fixed frequency.

Hence the mixing signal and the transmission carrier may be separated by a given spacing, which may in particular be controlled by an electronic oscillator thereby providing a high level of accuracy (e.g., in the MHz range).

According to an embodiment, the received signal is low pass filtered in the electrical domain.

According to an embodiment, the frequency of the transmission carrier is adjusted based on an offset between the frequency of the mixing signal and a center frequency of the received signal.

According to an embodiment, the mixing signal and the transmission carrier are both derived from a single light source utilizing one of the following:

- the mixing signal is obtained from the single light source, a frequency shift is obtained by a phase slope modulation over time and the frequency shift is used to determine the transmission carrier;
- the mixing signal and the transmission carrier are generated by modulation through a signal with a frequency amounting to a frequency shift $\Delta f$ or a sub-harmonic thereof;
- the mixing signal and the transmission carrier are obtained via an I-Q-modulator utilizing a phase-slope modulation corresponding to half the desired frequency shift value;
- the mixing signal and the transmission carrier are obtained via a comb laser structure.

It is noted that the sub-harmonic may in particular comprise a frequency of which an integer multiple amounts to the frequency shift value $\Delta f$.

Also, an optical transceiver is provided comprising

- a transmitter to transmit optical signals,
- a receiver to receive optical signals,
- a single light source that is utilized for a mixing signal and a transmission carrier, wherein the mixing signal is located within a frequency band of a received signal and/or wherein the transmission carrier is located within the frequency band of the transmission signal.

According to an embodiment, the transceiver is located in an optical network component, in particular in an OLT or an ONU.

Further, a device for processing optical signals is suggested, comprising a processing unit that is arranged to conduct the steps of the method as described herein.

According to an embodiment, the device is or is part of an optical line terminal or an optical network unit.

In addition, a communication system is provided comprising at least one device as described herein.

Details of one or more embodiments of the subject matter of this specification are set forth in the accompanying drawings and the description below. Other features, aspects, and advantages of the subject matter will become apparent from the description, the drawings, and the claims.

Fig. 1    shows an exemplary diagram of a PON comprising an OLT and several ONTs.

Fig.2    shows a schematic diagram visualizing a carrier frequency of a laser within a gap between a downstream band and an upstream band.

Fig.3    shows a schematic diagram depicting the downstream band and the upstream band at the OLT (or ONT) with a carrier frequency within a band gap.

Fig.4A    shows an optical spectrum of the upstream signals received at the OLT with a mixing signal in the receiving frequency band.

Fig.4B    shows a diagram of the resulting electrical spectrum based on the optical spectrum shown in Fig.4A.

Fig.4C    shows an optical spectrum of the downstream signals transmitted from the OLT comprising a transmission carrier that is determined based on the mixing signal shown in Fig.4A.

Examples described herein refer to placing a mixing signal (also referred to as LO signal) in (or around) the center of the received spectrum and a transmission carrier is derived based on the mixing signal by frequency shifting, in particular shifted by a frequency Δf. In an exemplary embodiment, the frequency Δf can be slightly larger than the bandwidth of the (transmitted or received) signal.

At least one of the transmission carrier or the mixing signal can be determined based on a single light source. The single light source may comprise a laser or a laser diode. The single light source may emit light at a single frequency and the approach described herein utilizes this single frequency to determine the transmission carrier and/or the mixing signal. Also, if the mixing signal is derived first based on the single light source, the transmission carrier may then be determined based on the mixing signal. This applies accordingly the other way round, i.e., first the transmission carrier then the mixing signal.

This approach bears the advantage that the bandwidth required at the receiver (e.g., bandwidth of photo diodes, TIAs and/or ADCs) is reduced. Any reflected signal at frequencies outside the received spectrum can be filtered in the electrical domain (electrical spectrum) and hence avoid unwanted saturation of amplifiers or ADCs.

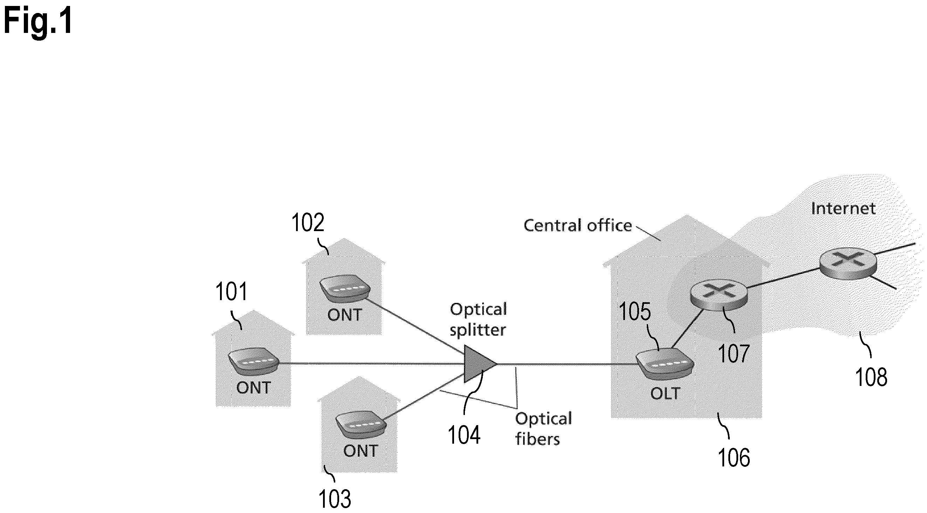

**Fig.1** shows an exemplary diagram of a PON comprising several ONTs 101, 102, 103 that are connected via an optical splitter 104 to an OLT 105 at a CO 106. It is noted that the ONT may also be referred to as ONU. The OLT 105 is further connected via a router 107 to the Internet 108.

In a coherent PON, signals are sent in separate bands from the OLT 105 to the ONTs 101, 102, 103 and from the ONTs 101, 102, 103 to the OLT 105. TDMA can be used as multiplexing technique to convey traffic from/-to the ONTs 101, 102, 103.

For coherent reception and transmission, a single laser could be used in the optical components, e.g., ONTs 101 to 103, OLT 105.

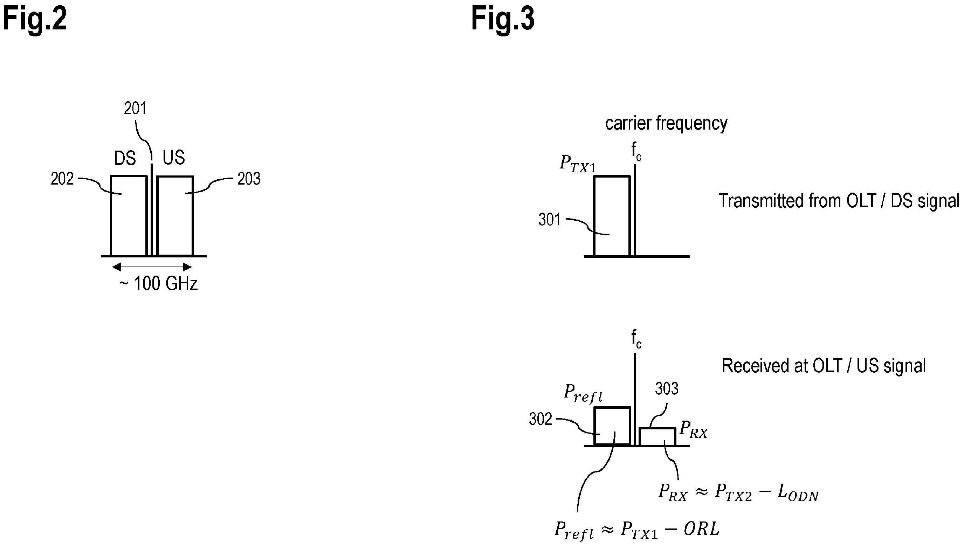

**Fig.2** shows a schematic diagram visualizing a carrier frequency 201 of a laser with a frequency that lies within a gap between a downstream (DS) band 202 and an upstream (US) band 203. Hence, the DS band and the US band are on two side bands of the carrier frequency 201. The overall bi-directional channel bandwidth in this example may amount to ca. 100 GHz.

It is noted that the Fig.2, Fig.3 as well as Fig.4A to Fig.4C show a frequency on the x-axis and a strength of the (frequency) signal on the y-axis.

The OLT 105 determines the central frequency, the ONTs 101, 102, 103 lock to this frequency for the common LO frequency and/or for the transmission carrier.

TDMA is used for multi-user access. However, TFDMA can also be used if side bands are sliced into different sub-bands or sub-carriers.

However, arranging the carrier frequency 201 between the DS band 202 and the US band 203 results in some disadvantages as shown and explained with regard to Fig.3.

**Fig.3** shows a schematic diagram depicting the DS band and the US band at the OLT (it applies accordingly to each ONT). As indicated above, in a coherent PON, the DS band 202 and the US band 203 use the same carrier frequency 201.

A signal in the DS band at a power $P_{TX1}$ 301 is transmitted from the OLT towards the ONT(s). This signal is (partially) reflected in the optical distribution network (ODN) and/or in the feeder line resulting in a reflected power $P_{refl}$ 302

$$P_{refl} \approx P_{TX1} - ORL,$$

in the US band, wherein ORL is the optical return loss.

Also, a (useful) signal is transmitted from the ONT at a power $P_{TX2}$ and received in the US band at the OLT with a power $P_{RX}$ 303, which amounts to

$$P_{RX} \approx P_{TX2} - L_{ODN},$$

wherein $L_{ODN}$ is the loss of the ODN.

If

$$L_{ODN} > ORL,$$

the reflected transmission power $P_{refl}$ 302 is larger than the received signal power $P_{RX}$, which significantly limits the reception gain and/or the ADC resolution.

Example: $L_{ODN}$ = 35 dB, ORL = 24 dB: The interference of the lower side band is 11 dB larger than the received signal (in case $P_{TX2} = P_{TX1}$).

The interference value also depends on the TX power differences between the OLT and the ONT. Typically, the OLT TX power is larger than the ONT TX power ($P_{TX1} > P_{TX2}$), which would further increase the interference level.

To overcome the disadvantage of the significant interference of the useful received signal, the frequency of a laser supplying a **mixing signal** may be set to the center of the receiving band (to receive the US signal), e.g., ca. +25 GHz off a nominal center frequency $f_c$.

The mixing signal could be provided by a local oscillator (LO) or it might be provided from another source. The mixing signal could in particular be a signal supplied by or based on a single light source, e.g., a laser, of the optical network element, e.g., OLT.

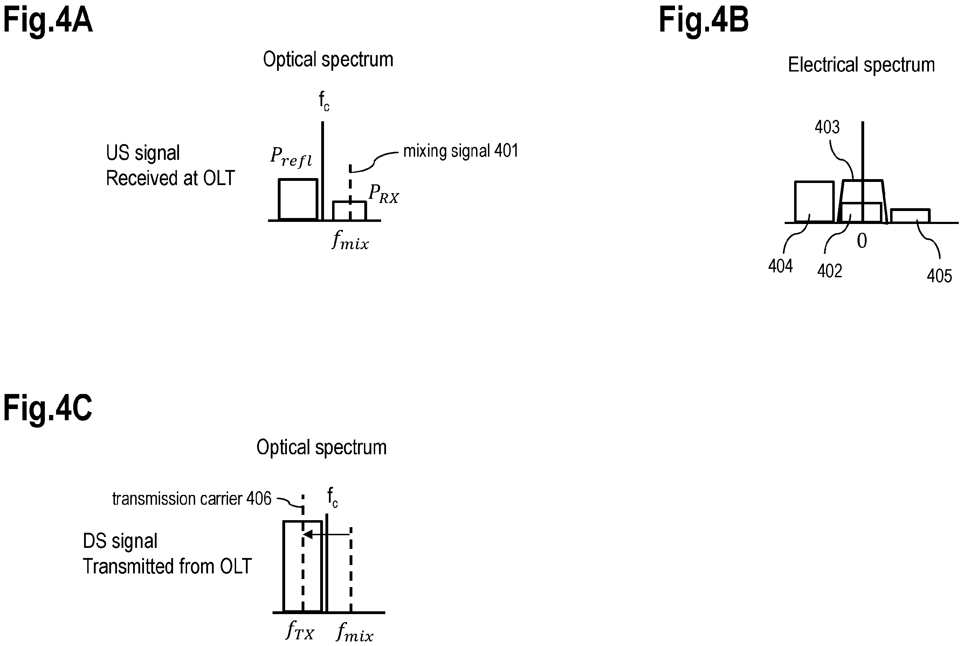

**Fig.4A** shows an optical spectrum of the US signals received at the OLT comprising the reflected signal with the reflected transmission power $P_{refl}$ 302 and the useful signal from the ONT received with the power $P_{RX}$ 303 as shown in and described with regard to Fig.3.

Contrary to Fig.3, the mixing signal 401 with a mixing frequency $f_{mix}$ is located within the frequency band of the receiving band, e.g., 25 GHz off the nominal center frequency $f_c$, i.e.:

$$f_{mix} = f_c + 25\text{GHz}.$$

It is noted that the mixing frequency $f_{mix}$ may in particular be set to the center of the receiving band or slightly off center of the receiving band.

**Fig.4B** shows a diagram of the resulting electrical spectrum comprising a down-mixed reflected signal 404, a useful signal 402 and an impairment signal 405, which is also based on the reflected power, but emerges due to impairments in the receiver. The useful signal 402 could be filtered by a low-pass characteristics 403 of an amplifier, e.g., a TIA. For example, the TIA could be designed to have a bandwidth of ca. 25 GHz to suppress any of the signals 404 and 405.

**Fig.4C** shows an optical spectrum of the DS signals transmitted from the OLT. It is visualized how a transmission carrier 406 at a transmission frequency $f_{TX}$ can be generated from the mixing frequency $f_{mix}$.

The frequency $f_{TX}$ of the transmission carrier 406 can be coupled to the mixing frequency $f_{mix}$ with a frequency shift amounting to ca. 50 GHz, i.e.:

$$f_{TX} = f_c - 25\text{GHZ} = f_{mix} - 50\text{GHz}.$$

For example, operating the ONT, the mixing frequency $f_{mix}$ could be locked to the received signal (e.g., by thermal tuning), then the frequency $f_{TX}$ is derived from this mixing frequency $f_{mix}$.

This can be achieved utilizing at least one of the approaches described hereinafter.

How to determine at least two frequencies (carriers, signals) from a single light source:

There are several approaches that can be used to couple the transmission carrier to the mixing signal (LO signal) or vice versa.

For example, the transmission carrier may be derived from a single light source (e.g., laser) that supplies the LO signal by frequency shifting. Also, the LO signal could be derived from the transmission carrier. It is yet an option to derive both (LO signal and transmission carrier) from a single (seed) laser signal, which may operate at a frequency in between the frequency of the LO signal and the frequency of the transmission carrier. Further, a different approach frequency coupling both signals may be chosen.

Hereinafter, a few examples are described in more detail:

(1) The LO signal is obtained as an output from a single-frequency laser, while the frequency shift Δf is obtained by a phase slope modulation in a reset-free phase modulator. A phase modulation with a linear phase increase over time t with

$$\phi_{mod}(t) = 2\pi \cdot \Delta f \cdot t$$

results in a frequency shift by a value of Δf. This phase modulation can be applied to the output signal from the single-frequency laser, resulting in an optical carrier shifted by Δf, which can then be used as transmission carrier. A reset-free phase modulator is described in EP 3786689 A1.

(2) According to [Hiroshi Yamazaki, Takashi Saida, Takashi Goh, Atsushi Mori, and Shinji Mino: Dual-carrier IQ modulator with a complementary frequency shifter, Vol. 19, No. 26 / OPTICS EXPRESS B69, 12 December 2011], an IQ-modulator can be used, wherein both output branches of an outer Mach-Zehnder structure are used to provide different frequencies. By a phase slope modulation corresponding to Δf/2, the signal frequency is up shifted by Δf/2 at one output port of the modulator and downshifted by Δf/2 at the other output port, such that they can be used as LO signal and as transmission carrier.

(3) Devices of generating comb lasers are described in [Lin Chang, Songtao Liu and John E. Bowers: Integrated optical frequency comb technologies, Nature Photonics, VOL 16, February 2022, pages 95 to 108]. These multiple optical carriers can then be filtered/selected, e.g., by optical filtering, to supply the LO signal and the transmission carrier.

Advantageously, the two frequencies (LO signal and transmission carrier) may be generated by a frequency amounting to Δf or Δf/2 or a sub-harmonic thereof. This frequency can be supplied by an electronic oscillator. A typical accuracy of such an oscillator may be better than 100 ppm (= $10^{-4}$). For a frequency shift of 50 GHz, this corresponds to a frequency error smaller than 5 MHz. The center frequency of the signal laser, according to any of the examples (1) to (3) above, or one of the two comb lines, according to example (4), can be locked to an accuracy of about 1 GHz. The same frequency error and error in frequency difference can be assumed from the other side of the link (e.g., OLT). The frequency offset between a transmission carrier of the OLT and a receiver LO signal at an ONU can be derived from the frequency estimation, which is performed in a DSP of the coherent receiver in the ONU. This value can be used two-fold:

- It can be used to tune the laser temperature to slightly change the wavelength of the laser.
- It can be communicated to the DSP of the ONU transmitter, such that an appropriate phase slope can be added to the modulation to align the center frequency of the transmitted signal to the LO frequency at the OLT to alleviate frequency and phase tracking.

The description above may refer to any network component OLT or ONT. Hence, the examples described with regard to the OLT may be applicable to the ONT accordingly or vice versa.

Looking at the ONU, the offset between the LO signal and the center frequency of the received band can be detected in a DSP handling the reception and it can be adjusted in the transmission modulator. If during the frequency offset estimation, which is a typical function in the receiver DSP sequence, a frequency offset of Δf between the LO signal $f_{mix}$ and a center frequency $f_{center}$ of the received band is determined, i.e.

$$\Delta f = f_{center} - f_{mix}.$$

This value Δf can be used in the transmitter data modulator to shift the transmitted signal center frequency by the same amount. This frequency shift of the transmission frequency can be achieved in the transmitter by phase slope modulation over time. A phase modulation with a linear phase increases over time t with

$$\phi_{mod}(t) = 2\pi \cdot \Delta f \cdot t$$

and results in a frequency shift by a value of Δf. This phase modulation can be applied in the transmitter modulator simultaneously and in addition to the data modulation. Instead of modulation of a complex modulation value

$$m(t) = a(t) \cdot \exp[\, j \cdot \phi(t)],$$

a modulation value of

$$m'(t) = m(t) \cdot \exp[\, j \cdot \phi_{mod}(t)]$$

is applied. A modulator bandwidth of ca. 30 GHz for a 50 GBd signal may be favorable.

**List of Abbreviations:**

| | |
|---|---|
| ADC | analog-to-digital converter |
| CO | central office |
| DS | downstream |
| DSP | digital signal processor |
| LO | local oscillator |
| ODN | optical distribution network |
| OLT | optical network termination |
| ONU | optical networking unit |
| ORL | optical return loss |
| PON | passive optical network |
| $P_{TX1}$ | transmission power of signal transmitted from OLT to ONT |
| $P_{TX2}$ | transmission power of signal transmitted from ONT to OLT |
| TDMA | time-division multiple access |
| TFDMA | time-frequency division multiple access |
| TIA | transimpedance amplifier |
| US | upstream |

## Claims

1. A method for processing optical signals,

   - wherein a mixing signal and a transmission carrier are both derived from a single light source,
   - wherein the mixing signal is located within a frequency band of a received signal and/or wherein the transmission carrier is located within the frequency band of the transmission signal.

2. The method according to claim 1, wherein the single light source comprises a laser or a laser diode.

3. The method according to any of the preceding claims, wherein the method is operated by an optical transceiver.

4. The method according to any of the preceding claims, wherein the mixing signal corresponds to or is based on a local oscillator for receiving signals.

5. The method according to any of the preceding claims, wherein the mixing signal and a transmission carrier are separated by a fixed frequency.

6. The method according to any of the preceding claims, wherein the received signal is low pass filtered in the electrical domain.

7. The method according to any of the preceding claims, wherein the frequency of the transmission carrier is adjusted based on an offset between the frequency of the mixing signal and a center frequency of the received signal.

8. The method according to any of the preceding claims, wherein the mixing signal and the transmission carrier are both derived from a single light source utilizing one of the following:

   - the mixing signal is obtained from the single light source, a frequency shift is obtained by a phase slope modulation over time and the frequency shift is used to determine the transmission carrier;
   - the mixing signal and the transmission carrier are generated by modulation through a signal with a frequency amounting to a frequency shift $\Delta f$ or a sub-harmonic thereof;
   - the mixing signal and the transmission carrier are obtained via an I-Q-modulator utilizing a phase-slope modulation corresponding to half the desired frequency shift value;
   - the mixing signal and the transmission carrier are obtained via a comb laser structure.

9. An optical transceiver comprising

   - a transmitter to transmit optical signals,
   - a receiver to receive optical signals,
   - a single light source that is utilized for a mixing signal and a transmission carrier, wherein the mixing signal is located within a frequency band of a received signal and/or wherein the transmission carrier is located within the frequency band of the transmission signal.

10. The transceiver according to claim 9, wherein the transceiver is located in an optical network component, in particular in an OLT or an ONU.

11. A device for processing optical signals, comprising a processing unit that is arranged to conduct the steps of the method according to any of claims 1 to 8.

12. The device according to claim 11, wherein the device is or is part of an optical line terminal or an optical network unit.

13. A communication system comprising at least one device according to any of claims 9 to 12.

# Fig.1

# Fig.2

201

DS | US

202 — 203

$\longleftrightarrow$
~ 100 GHz

# Fig.3

carrier frequency

$f_c$

$P_{TX1}$

301

Transmitted from OLT / DS signal

$f_c$

Received at OLT / US signal

$P_{refl}$          303

302 —          $P_{RX}$

$P_{RX} \approx P_{TX2} - L_{ODN}$

$P_{refl} \approx P_{TX1} - ORL$

EP 4 550 692 A1

# Fig.4A

Optical spectrum

US signal
Received at OLT

$P_{refl}$  —  mixing signal 401
$f_c$
$P_{RX}$
$f_{mix}$

# Fig.4B

Electrical spectrum

403
0
404   402   405

# Fig.4C

Optical spectrum

DS signal
Transmitted from OLT

transmission carrier 406
$f_c$
$f_{TX}$   $f_{mix}$

EP 4 550 692 A1

Europäisches
Patentamt

European
Patent Office

Office européen
des brevets

# EUROPEAN SEARCH REPORT

**Application Number**

EP 23 20 7182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/326995 A1 (ZHOU CHUANG [US] ET AL) 24 October 2019 (2019-10-24) * paragraphs [0070], [0071], [0080]; figure 1 * | 1-13 | INV. H04B10/272 H04B10/61 |
| X | US 11 349 592 B1 (XU MU [US] ET AL) 31 May 2022 (2022-05-31) * column 5, line 35 – column 6, line 52; figures 1,2 * | 1-5,9-13 | |
| X | US 10 972 184 B2 (INFINERA CORP [US]) 6 April 2021 (2021-04-06) * column 9, line 35 – column 10, line 29; figures 1,8 * | 1-6,9-13 | |
| X | WO 2014/040272 A1 (HUAWEI TECH CO LTD [CN]; ZHOU LEI [CN]; PENG GUIKAI [CN]) 20 March 2014 (2014-03-20) * page 8, line 7 – page 10, line 4; figure 3 * | 1-4,9-13 | |
| X | CANO IVAN ET AL: "Bidirectional coherent PON with ONU based on reused direct-modulated LO", 2016 OPTICAL FIBER COMMUNICATIONS CONFERENCE AND EXHIBITION (OFC), OSA, 20 March 2016 (2016-03-20), pages 1-3, XP032942313, [retrieved on 2016-08-09] * the whole document * | 1-7,9-13 | TECHNICAL FIELDS SEARCHED (IPC) H04B |

The present search report has been drawn up for all claims

| Place of search | Date of completion of the search | Examiner |
|---|---|---|
| Munich | 12 April 2024 | Borsier, Celine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 7182

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2024

| Patent document cited in search report | | | Publication date | Patent family member(s) | | | Publication date |
|---|---|---|---|---|---|---|---|
| US 2019326995 | A1 | | 24-10-2019 | US | 2019326995 | A1 | 24-10-2019 |
| | | | | US | 2020244367 | A1 | 30-07-2020 |
| | | | | US | 2021367676 | A1 | 25-11-2021 |
| US 11349592 | B1 | | 31-05-2022 | US | 11349592 | B1 | 31-05-2022 |
| | | | | US | 11757556 | B1 | 12-09-2023 |
| | | | | US | 2019393974 | A1 | 26-12-2019 |
| US 10972184 | B2 | | 06-04-2021 | AU | 2020269575 | A1 | 06-01-2022 |
| | | | | CA | 3139667 | A1 | 12-11-2020 |
| | | | | CN | 114450898 | A | 06-05-2022 |
| | | | | US | 2020358530 | A1 | 12-11-2020 |
| | | | | US | 2020358531 | A1 | 12-11-2020 |
| | | | | US | 2022376812 | A1 | 24-11-2022 |
| | | | | WO | 2020226718 | A1 | 12-11-2020 |
| WO 2014040272 | A1 | | 20-03-2014 | CN | 103004111 | A | 27-03-2013 |
| | | | | WO | 2014040272 | A1 | 20-03-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3786689 A1

**Non-patent literature cited in the description**

- **HIROSHI YAMAZAKI** ; **TAKASHI SAIDA** ; **TAKASHI GOH** ; **ATSUSHI MORI** ; **SHINJI MINO**. Dual-carrier IQ modulator with a complementary frequency shifter. *OPTICS EXPRESS*, 12 December 2011, vol. 19 (26), B69

- **LIN CHANG** ; **SONGTAO LIU** ; **JOHN E. BOWERS**. Integrated optical frequency comb technologies. *Nature Photonics*, February 2022, vol. 16, 95-108